# NEUE EUROPÄISCHE PATENTSCHRIFT

(11) **EP 2 151 372 B2**
(45) Veröffentlichungstag und Bekanntmachung des Hinweises auf die Entscheidung über den Einspruch: **12.02.2020**
(45) Hinweis auf die Patenterteilung: 25.01.2012
(21) Anmeldenummer: 09008032.6
(22) Anmeldetag: 19.06.2009
(51) Int. Cl.: B62D 33/02, B60J 5/10, E05B 65/16

(54) **Fahrzeugaufbau für Nutzfahrzeuge mit schwenkbarem heckseitigen Portal Balken von hinteren Türflügel**
Vehicle deck for commercial vehicles with pivotable rear door supporting beam
Plateforme pour véhicules utilitaires comprenant une poutre de soutien des portes arrières

(30) Priorität: 31.07.2008 DE 102008035768
(43) Veröffentlichungstag der Anmeldung: 10.02.2010
(73) Patentinhaber: Fahrzeugwerk Bernard Krone GmbH, 48480 Spelle (DE)
(72) Erfinder: Irion, Manfred, 49757 Werlte (DE); Menke, Ansgar, 49757 Werlte (DE)
(74) Vertreter: Busse & Busse

(56) Entgegenhaltungen:
- EP-A- 1 136 292
- DE-A1- 10 222 998
- DE-U1-202006 008 675

## Beschreibung

Die Erfindung bezieht sich auf einen Fahrzeugaufbau für Nutzfahrzeuge und ein Türelement umfassenden Rückwand sowie ein sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen abgestützt und über Kraftheber in unterschiedliche Höhenpositionen überführbar sind, wobei die Türelemente über Verriegelungsfinger aufweisende Türsicherungselemente an einem heckseitigen Portalbalken verriegelbar sind, welcher mehrere übereinander angeordnete Verriegelungsaufnahmen zur Verriegelung des Türelementes in unterschiedlichen Höhenlagen des Hubdaches aufweist.

Fahrzeugaufbauten der vorgenannten Art für unterschiedliche Be- und Endladezwecke mit Hubdächern, sind insbesondere für Sattelauflieger mit Planenaufbauten und Schiebedächern bekannt.

Solche Hubdächer sind insbesondere deshalb von Interesse, da in Europa mit Ausnahme einiger Länder in Süd- und Osteuropa Fahrzeuge nur mit einer maximalen Aufbauhöhe von 4000 mm im Straßenverkehr bewegt werden dürfen. In einigen süd- und osteuropäischen Ländern sind jedoch auch Aufbauhöhen von mehr als 4 Metern zugelassen, beispielsweise in Spanien, wo eine Aufbauhöhe von 4600 mm zugelassen ist. In diesen Ausnahmeländern können Aufbauten auch in einer Höhe oberhalb von 4000 mm, d.h. in einem angehobenen Zustand, mit einem Mehr an Laderaum gefahren werden. Um einen Fahrzeugaufbau in einen angehobenen Zustand zu überführen, sind bei bekannten Lösungen aufwändige Hebemittel und Verriegelungselemente vorzusehen. Darüber hinaus ist ein hoher Justieraufwand zu betreiben.

Sind Fahrzeugaufbauten bekannt, bei denen eine Hubdach in unterschiedlichen Höhenpositionen zu bringen ist, geht damit die Schwierigkeit einher sicherzustellen, dass sowohl eine solide, verwindungssteife und ergonomische Arretierung des angehobenen Hubdaches bzw. mit diesem verbundenen Aufbauteilen in allen Höhenpositionen möglich ist, aber auch, dass eine gute Abdichtung gegen Staub und Feuchtigkeit des Aufbauinneren zu gewährleisten ist. Zudem muss es möglich sein, den Aufbau von der Heckportalseite aus uneingeschränkt be- und entladen zu können.

Ein gattungsgemäßes Fahrzeugbau für Nutzfahrzeuge ist aus der DE 20 2006008675 U1 bekannt.

Es ist Aufgabe der vorliegenden Erfindung, einen Fahrzeugaufbau der eingangs genannten Art zu schaffen, bei dem das Hubdach in unterschiedliche Höhenpositionen zu bringen ist, darüber hinaus jedoch in allen Höhenpositionen ein Türelement sicher zu verriegeln ist, aber auch eine uneingeschränkte Be- und Entladungsmöglichkeit von der Heckportalseite aus gegeben ist.

Zur Lösung dieser Aufgabe zeichnet sich der Fahrzeugaufbau der eingangs genannten Art durch die im Patentanspruchs 1 angegebenen Merkmale aus.

Durch den um die horizontale Achse klappbaren heckseitigen Portalbalken ist sicherzustellen, dass auch bei angehobenem Hubdach die vollständigen Laderaumhöhe für den Be- und Entladevorgang zur Verfügung steht, da der Portalbalken in eine solche weggeschwenkte bzw. weggeklappte Position zu bringen ist, dass die volle Aufbauhöhe uneingeschränkt auch für den Be- und Entladevorgang genutzt werden kann.

Dazu ist der Heckportalbalken nicht nur verschwenkbar, sondern darüber hinaus auch verschiebbar ausgebildet und dient gleichfalls als Türanschlag, Aufbauabdichtung, Heckportaldiagonalversteifung und Türverriegelung in allen Höhenpositionen. Der Portalbalken ist mit einem als Schiebedach ausgebildeten Hubdach zusammen in Richtung auf die Vorderwand zu verschieben, um eine freie Durchlademöglichkeit zu gewährleisten. Diese Kombination ermöglicht es einer Bedienperson, in relativ wenig Arbeitsschritten eine Höhenverstellung des Daches vorzunehmen bei gleichfalls guter Abdichtung und Verriegelung der Heckportaldoppeltüren.

Der Heckportalbalken als hinteres Abschlusselement des Aufbaus zum Dach hin ist als winkelförmiger Profilkörper ausgebildet, bei dem die horizontale Schwenkachse - bezogen auf die vertikale Tü- rebene - zur Vorderwand des Fahrzeugaufbaus hin lageversetzt ist, so dass sich auch bei einem nur geringen Schwenkwinkel schon die volle Entladehöhe bei allen Höhenpositionen einstellt.

Der Heckportalbalken ist derart ausgebildet, dass er eine kastenförmige Gestalt ist, bestehend aus einer Außenwandung und einer dem Fahrzeugbauinneren zugewandten Wandung, so dass ein Kasteninnenraum verbleibt, in dem Haltestangen für jedes Türsicherungselement bzw. für jeden Verriegelungsfinger solcher Sicherungselemente vorhanden sind. Die Wandung zum Fahrzeugbauinneren ist geschlossen ausgebildet, so dass durch den Heckportalbalken in jeder Höhenposition das Fahrzeugbauinnere gegen Schmutz und Feuchtigkeit geschützt ist. Eine Außenwandung des Heckportalbalkens weist die Verriegelungsaufnahmen auf, die übereinander angeordnet sind. Dabei kann eine Standardhöhe von ca. 4000 mm realisiert sein aber auch über die Kraftheber das Dach gleichförmig um z.B. 600 mm anzuheben sein. Die Dachhöhenverstellung kann in 50 mm Stufen bis zu der maximal für die in Fahrbetrieb gewünschte Fahrposition in der höchsten Endlage erfolgen. In dieser Stufung von 50 mm sind die entsprechenden Verriegelungsaufnahmen in der Außenwandung des Heckportalbalkens vorgesehen, so dass in jeder dieser Positionen die Verriegelungsfinger durch die Verriegelungsaufnahmen hindurch die Haltestange erfassen und ergreifen können, um die Tür sicher zu verriegeln. Ein Hochklappen des Portalbalkens kann über zwei Gasdruckfedern erfolgen.

Da sich im abgeklappten Zustand des Portalbalkens der dem Türelement zugewandte Schenkel des abgewinkelten Heckportalbalken derart erstreckt, dass sich je nach Höhenmaß eine Überlappung vom Inneren her zwischen Heckportalbalken und Türflügel ergibt, ist eine sichere Überdeckung und damit eine sichere Abdichtung ermöglicht. Über den Heckportalbalken mit seiner kastenförmigen Ausbildung und die entsprechende Verriegelung ist auch eine Diagonalversteifung sicherzustellen.

Dazu sind im Bereich der Verriegelungsaufnahmen Lagerböcke vorgesehen, die sich zwischen der Vorderwand des kastenförmigen Heckportalbalkens und der Rückwand erstrecken und einen Durchgriffsraum für die Verriegelungsfinger ausbilden. Diese steifen den Heckportalbalken im Sinne der angesprochenen Diagonalversteifung aus. Zudem dient ein solcher Lagerbock als Zentrierung und Abstützung für die Verriegelungsfinger der Türsicherungselemente und wirkt einer eventuellen Aufbauverwindung entgegen.

Bevorzugtermassen ist der Fahrzeugaufbau darüber hinaus mit Krafthebern für jeweils zwei Eckrungen versehen, wobei nach jeweiliger Aktivierung die vordere und hintere oder jeweils zwei seitliche Eckrungen in ihre jeweilige z.B. maximale Höhenposition überführt werden und die Eckrungen nach Deaktivierung der Kraftheber infolge Schwerkraft in eine durch ein jeweiliges Widerlager einstellbare Höhenposition absenkbar ist.

Danach kann in Eckrungen das entsprechende Widerlager in eine Position gebracht werden, die dem einzustellenden Höhenmaß entspricht. Nach Deaktivierung, z.B. Drucklosschalten eines als Hydraulikzylinder ausgebildeten Krafthebers, senkt sich nun das Hubdach automatisch ohne eine irgendwie gearteten zusätzlichen Steuerungs- oder Justieraufwand infolge Schwerkraft ab und gelangt in eine abgesenkte Position, an der sich z.B. Schubstücke von Eckrungen, an denen das Hubdach befestigt ist, an dem jeweiligen Widerlager abstützen. Damit ist automatisch die exakt eingestellte Höhenposition eingenommen. Die Bedienperson braucht nur noch die für eine Verriegelung insgesamt notwendigen Schritte zu vollziehen, z.B. Schließen von Seitenwänden, Verriegeln von Türen und dergleichen, wonach ein gewünschtes anderes Transport- bzw. Aufbauhöhenmaß eingestellt ist. Dies ist außerordentlich schnell zu vollziehen und kann mit einem geringstmöglichen Risiko hinsichtlich einer Fehleinstellung durchgeführt werden.

Vorzugsweise sind die Kraftheber als Hydraulikzylinder ausgebildet, wobei die beiden den beiden seitlichen vorderen Eckrungen zugeordneten Hydraulikzylinder synchron geschaltet sind. Ebenso sind die Zylinder für die hinteren Eckrungen synchron geschaltet, so dass von einer Hydraulikpumpe lediglich ein Zylinder mit dem Druckmedium zu versorgen ist, und von diesem ersten Hydraulikzylinder das Druckmedium zu dem benachbarten Hydraulikzylinder getangt, so dass synchron und ohne das Risiko eines Verkantens das Hubdach gleichmäßig vorne, aber auch gleichmäßig hinten durch die Kraftheber anzuheben ist. Eckrungen haben zweckmäßigerweise ein höhenbewegliches und höhenmäßig arretierbares Schubstück, an das der Kraftheber angreifen kann. Dabei muss z.B. eine Schubstange eines Krafthebers nicht fest mit dem Schubstück verbunden sein. Vielmehr kann er von unten gegen ein entsprechendes Schubstück verfahren werden, wonach er dieses kontaktiert und es z.B. in die maximale Höhenposition verfährt. Danach kann er auch relativ zu dem Schubstück zurück in seine Ausgangslage nach entsprechendem Drucklosschalten der Krafthebel verfahren werden, da das Hubdach und mithin auch das Schubstück infolge der Schwerkraft und mithin selbsttätig zu dem jeweiligen Widerlager nach unten verfährt.

In einer Eckrunge ist zweckmäßigerweise ein Schlüsselloch bzw. Schlüsselelement vorgesehen, mit dem ein bevorzugtermaßen als Schiebeelement ausgebildeter Schlüssel zusammenwirkt, der relativ beweglich zu dem Schlüsselelement ausgeführt ist. Das Schlüsselelement ist im Inneren der Eckrunge angeordnet. Oberhalb des Schlüssels ist das Schubstück angeordnet, wiederum im Inneren der Eckrunge. Somit sind diese Teile verdeckt in der Eckrunge angeordnet, so dass nur noch entsprechende Betätigungselemente des Schlüssels von außen her zugänglich sind. Der Schlüssel als Schiebeelement hat vorzugsweise Nuten, die in Schlitzen des Schlüsselelementes geführt sind und entsprechende Anformungen, die zwecks Arretierung in die entsprechenden Schlüssellöcher des Schlüsselelementes hineingreifen können. Durch eine entsprechende Bedienung, z.B. einer Schlaufe kann der Schlüssel aus dem Schlüsselloch wieder herausgezogen werden und in eine entsprechende andere Position bewegt werden, um dort ein anderes Höhenmaß für eine Widerlagerposition für das Schubstück und damit das Hubdach einzunehmen. Dies vollzieht sich jedoch alles innerhalb der Eckrunge, so dass eine auch spritzwassergeschützte sichere innere Lage beibehalten werden kann. Um auch bei einer erhöhten Transportaufbauhöhe die Anordnung von außen her verdeckt zu halten, kann an dem Schubstück auch ein mit Abstand zu diesem angeordnetes Schutzblech vorgesehen sein, das in der Niedrigposition des Schubstücks Aufbauteile übergreift, jedoch bei herausgefahrenem Schubstück bei erhöhtem Aufbaumaß das herausgefahrene Schubstück nach außen hin verdeckt.

Bevorzugtermaßen sind die Seitenwände als flexible Plane ausgebildet. Diese ist an ihrer der Vorderwand und der Rückwand zugewandten Seitenkanten an vertikal ausgerichteten Spannstangen festzulegenden, die nach einer Weiterbildung der Erfindung ein Spannstangenrohr und eine in diesem geführte innere Spannrolle aufweist. Die Spannstangen sind längenveränderlich ausgebildet, um der Höhenverstellung des Hubdaches folgen zu können. Die seitlichen Planen sind dazu zweckmäßigerweise derart im Innenbereich in eine Falte gelegt, so dass diese Falte dem Höhenverstellmaß des Aufbaus entspricht. Eine derartige Längenveränderung kann auch die Spannstange durchführen.

Dazu ist zweckmäßigerweise die Spannrolle in unterschiedlichen Positionen an dem Spannstangenrohr mittels eines Riegels verdrehsicher festzulegen und kann mithin relativ bewegt werden. Innerhalb der Spannrolle ist eine Schlitzführung zur Aufnahme eines Keders der flexiblen Seitenwand vorgesehen, so dass aus dem Spannstangenrohr die flexiblen Seitenwandungen ebenfalls über eine Schlitzführung herausgeführt ist, so dass alle anderen Teile verdeckt angeordnet sind. Das Spannrohr hat zweckmäßigerweise einen klappbaren Hebel mit einem Verriegelungselement, das von innen in entsprechende Bohrungen in das Spannstangenrohr eingreifen kann. Unterenends hat die Spannrolle bevorzugtermaßen ein Kopfstück, das als Vierkant ausgebildet ist, das in eine entsprechend Vierkantaufnahme des Fahrzeugaufbaus einführbar ist.

Hinsichtlich wesentlicher weiterer Ausgestaltungen der Erfindung wird auf weitere Unteransprüche, die nachfolgende Beschreibung und die Zeichnung verwiesen. In der Zeichnung zeigen:
- Fig. 1: ein Ausführungsbeispiel von Krafthebern für die Eckrungen, die als hydraulische Kraftheber ausgebildet sind,
- Fig. 2: in schematischer Ansicht eine Vorderansicht einer Doppelflü- geltür einer Rückwand mit seitlichen Eckrungen,
- Fig. 3: eine Draufsicht auf das Ausführungsbeispiel nach Fig. 2,
- Fig. 4: eine Vorderansicht einer Eckrunge mit zugeordneter Spanns- tange,

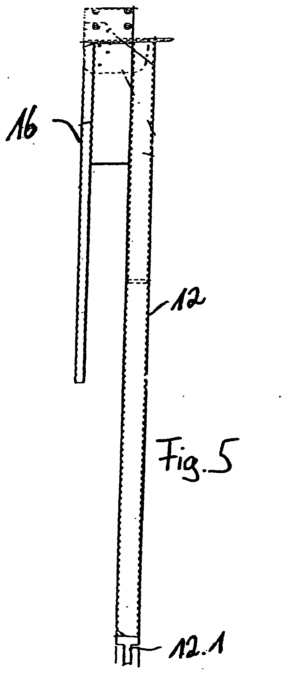

- Fig. 5: ein Ausführungsbeispiel eines Schubstücks einer Eckrunge mit daran befestigtem Schutzblech,
- Fig. 6: ein Ausführungsbeispiel eines Schlüsselelementes einer Eck- runge,

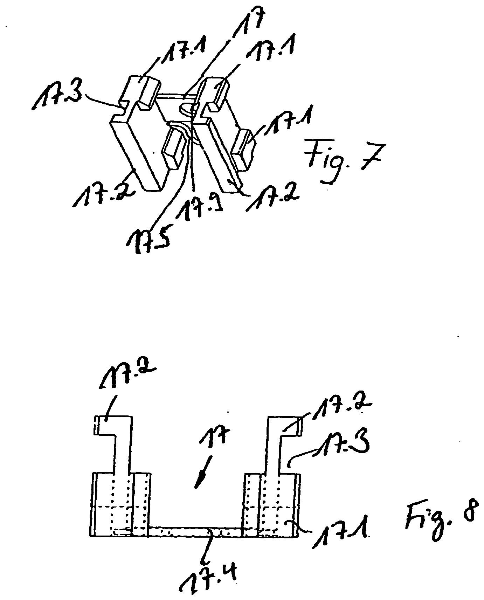

- Fig. 7: in einer perspektivischen Darstellung ein Ausführungsbeispiel eines als Schiebeelement ausgebildeten Schlüssels für das Schlüsselelement,
- Fig. 8: eine Querschnittsdarstellung des Schlüssels nach Fig. 7,

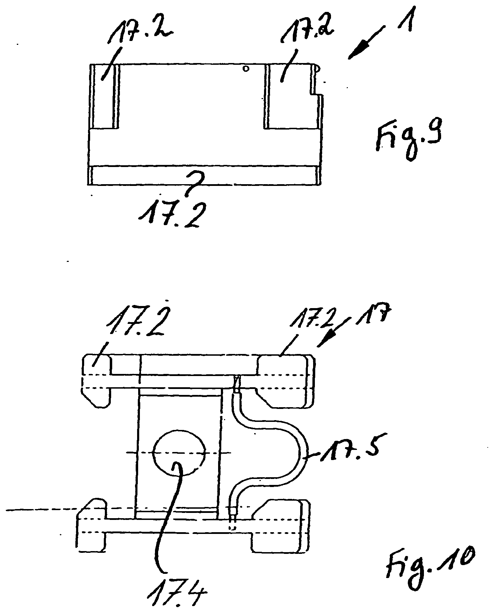

- Fig. 9: eine Seitenansicht des Schlüssels nach Fig. 7 und 8, und
- Fig. 10: eine Draufsicht auf den Schlüssel nach Fig. 7 bis 9,
- Fig. 11: in verschiedenen perspektivischen Ansichten auszugsweise ein Ausführungsbeispiel einer Spannstange,
- Fig. 12: ausschnittsweise eine Draufsicht auf einen hinteren Türflügel mit einem oberen klappbaren Portalbalken,
- Fig. 13: eine Seitenansicht auf das Ausführungsbeispiel nach Fig. 12,
- Fig. 13a: eine Vergrößerung des Details nach Fig. 13,

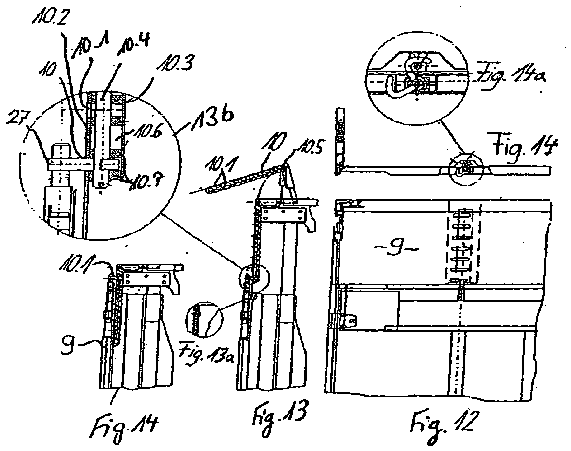

- Fig. 13 b: eine Vergrößerung des Details nach Fig. 13,
- Fig. 14: eine analoge Darstellung zu Fig. 13 bei abgesenktem Portal- balken, der sich in der abgesenkten Position hinter dem Türflü- gel erstrecken
- Fig. 14a: eine Vergrößerung des Details nach Fig. 14;

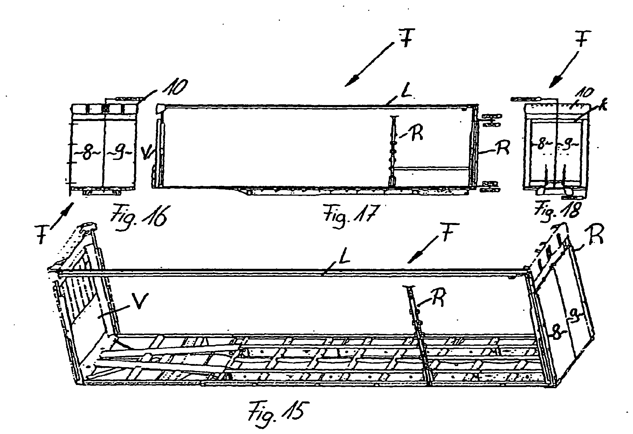

- Fig. 15: in einer schematisch-perspektivischen Darstellung ein Ausfüh- rungsbeispiel eines Fahrzeugaufbaus;
- Fig. 16: eine Ansicht von hinten auf den Fahrzeugaufbau nach Fig. 15;
- Fig. 17: eine Seitenansicht des Fahrzeugaufbaus nach Fig. 15, und
- Fig. 18: eine Vorderansicht des Fahrzeugaufbaus nach Fig. 15.

In der Zeichnung sind grundsätzlich gleichwirkende Teile mit übereinstimmenden Bezugsziffern versehen.

In der Zeichnung ist in den Fig. 15 bis 18 allgemein ein Fahrzeugaufbau F veranschaulicht, der wie herkömmlich ein Fahrgestell haben soll, das über Räder auf dem Erdboden abstützbar ist. Dieser hat eine Rückwand R, die in den meisten Anwendungsfällen eine an den hinteren Eckrungen 11 verschwenkbar abgestützte Türflügel 8, 9 hat. Zusätzlich ist eine Stirnwand S im vorderen Bereich des Fahrzeugaufbaus F vorgesehen. Rückwand R und Stirnwand S sind über obere Längsträger L verbunden, die genauso wie vordere und hintere Querträger 10 an den vorderen beiden Eckrungen 11 wie auch an den hinteren beiden Eckrungen 11 abgestützt sind. Zusätzlich können noch weitere Rungen R vorgesehen sein, z.B. ein oder mehrere mit Abstand voneinander zwischen den vorderen und hinteren Eckrungen angeordnete Seitenrungen.

Oberhalb der Längs- und Querträger L, 10 ist ein nicht dargestelltes Dach vorgesehen, das in dem vorliegenden Ausführungsbeispiel als Hubdach ausgebildet ist. An den Seitenwandbereichen ist in den meisten Anwendungsfällen eine nicht dargestellte Seitenwandplane vorzusehen, die gleitverschieblich gehaltert ist, um das Fahrzeuginnere auch von der Seite her beladen zu können. Ebenfalls ist es möglich, das Hubdach mit einem Schiebedach zu versehen. Im Rahmen der vorliegenden Erfindung geht es darum, das Hubdach in unterschiedlichen Höhenpositionen feststellen zu können, um ein Fahrzeugaufbau zu schaffen, der bedienfreundlich und auf einfache und sichere Weise auf unterschiedliche Aufbauhöhen einzustellen ist.

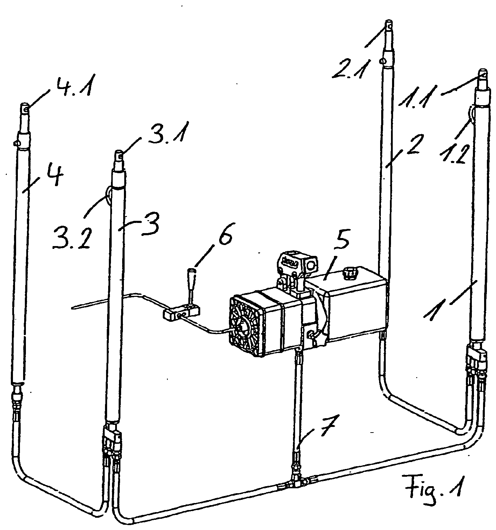

Dazu sind in dem in Fig. 1 gezeigten Ausführungsbeispiel insgesamt vier als Hydraulikzylinder ausgebildete Kraftheber 1, 2, 3 und 4 vorgesehen, die entsprechende Hubstangen 1.1, 2.1, 3.1 und 4.1 aufweisen. Diese werden von einer Pumpe 5 mit einem Hydraulikmedium versehen, wobei nach Aktivierung zunächst über eine Hydraulikleitung 7 die beiden Zylinder 1 und 3 mit dem Hydraulikmedium versehen werden und dann über eine jeweilige Leitung 1.2 und 3.2 die Zylinder 2 und 4 mit dem Hydraulikmedium beaufschlagt werden, so dass die Zylinder 1 und 2 synchron und zum anderen die Zylinder 3 und 4 synchron geschaltet sind. Über einen Hebel 6 sind die Leitungen drucklos zu schalten, so dass dann die Schubstangen 1.1, 2.1, 3.1 und 4.1 selbsttätig ihre eingefahrene Ausgangsposition wieder einnehmen können.

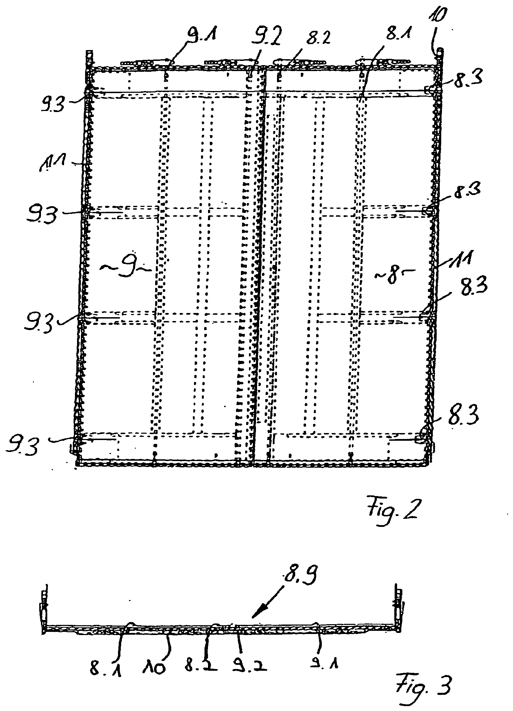

In den Fig. 2 und 3 ist die Rückwand eines Fahrzeugaufbaus nach einem Ausführungsbeispiel gezeigt, die zwei aufschwenkbare Türflügel 8 und 9 aufweist mit entsprechenden Verriegelungsstangen 8.1 und 8.2 bzw. 9.1 und 9.2. Diese Verriegelungsstangen greifen ein in jeweilige Haltestangen eines Portalbalkens 10, der noch näher anhand der Fig. 12, 13 und 14 erläutert werden wird. Die Heckflügeltüren 8 und 9 sind über Scharniere 8.3 bzw. 9.3 an Eckrungen 11 des Fahrzeugaufbaus schwenkbeweglich gehaltert.

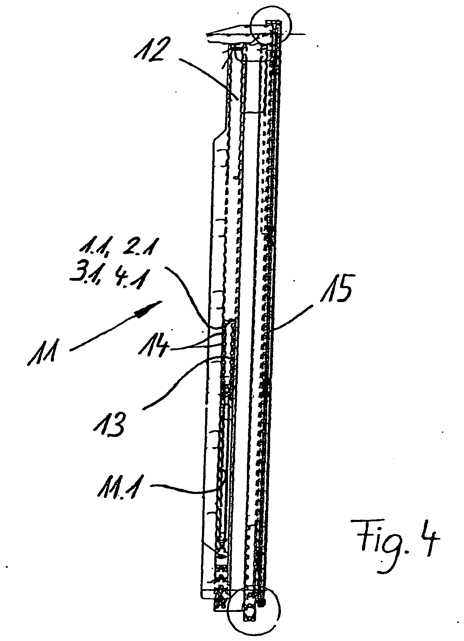

Diese Eckrungen 11 sind höhen- bzw. längenveränderlich ausgebildet, und zwar nach entsprechender Aktivierung der Kraftheber 1, 2, 3 und 4 und Herausfahren der Schubstangen 1.1, 2.1, 3.1 und 4.1. Dazu weist die aus Fig. 4 ersichtliche Eckrunge ein Schubstück 12 auf und ein Schlüsselelement 13, an dem das Schubstück 12 höhenbeweglich entlanggleiten kann.

Wie aus Fig. 4 ersichtlich, hat das Schlüsselelement 13 eine Anzahl von Schlüssellöchern 14, die in der Darstellung nach Fig. 4 teilweise aufgrund der dort eingenommenen Höhenlage verdeckt sind. Das Schubstück 13 ist in der Eckrunge 11 versenkt angeordnet, wozu die Eckrunge 11 eine nuten- bzw. schlitzförmige Öffnung 11.1 hat. Das ansonsten im oberen Bereich der Eckrunge 11 ersichtliche Schubstück 12 ist weitestgehend abgedeckt.

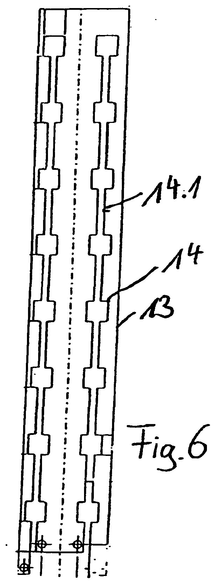

Dem Schubstück 12 ist ein Schlüssel 17 zugeordnet. Dieser hat seitliche abgewinkelte Anformungen 17.2, so dass sich zwischen den Anformungen 17.1 und den Abwinkelungen 17.2 eine nutenförmige Aufnahme 17.3 ergibt. Wie aus Fig. 6 ersichtlich, sind die Schlitze 14.1 des Schlüsselelementes 13 nach unten hin offen, so dass von unten der als Schiebeelement ausgebildeter Schlüssel 17 eingeführt werden kann, wonach er mit seinen Aufnahmen 17.3 die den Schlitzen 14.1 benachbarten Bereiche des Schlüsselelementes 13 aufnimmt. Hat er ein entsprechendes Höhenmaß erreicht, was einer bestimmten Aufbauhöhe entspricht, kann er in die Schlüssellöcher 14 mit seinen Anformungen eingedrückt werden, so dass der Schlüssel 12 in dieser Position arretiert ist. Gelangt das Schubstück 12 infolge seiner Schwerkraft nach Drucklosstellung der Kraftheber in eine abgesenkte Position, kann es sich an dem arretierten Schlüssel 17 als Widerlager abstützen, so dass dies der eingestellten Höhenposition der Eckrunge 11 entspricht. Dies ist auch die eingestellte Höhe des Nutzfahrzeugaufbaus und damit des Hubdaches und des Portalbalkens 10, was noch näher erläutert werden wird. In der arretierten Position kann der Schlüssel 17 zusätzlich noch gesichert werden, z.B. über eine Schraubverbindung, die in das Loch 17.4 eingreift. Um den Schlüssel wieder aus der Arretierung herauszuziehen, ist im dargestellten Ausführungsbeispiel eine Schlaufe 17.5 vorgesehen.

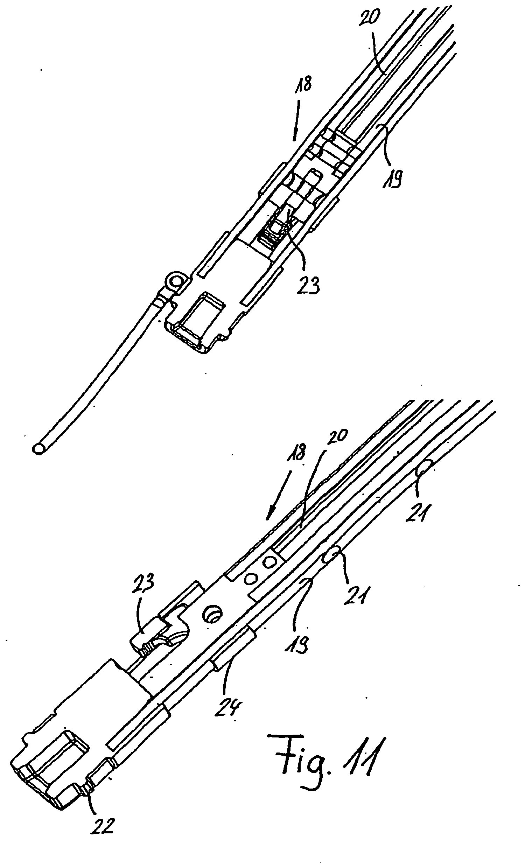

In Fig. 11 ist näher eine allgemein mit 18 bezeichnete Spannstange dargestellt. Diese hat ein Spannstangenrohr 19 und eine innerhalb des Spannstangenrohrs 19 gelegene Spannrolle 20. Die Spannstange 18 hat Bohrungen 21, in die Verriegelungselemente des Spannstangenrohres 19 einzubringen sind. Die Spannrolle 20 ist relativ zu dem Spannstangenrohr 19 zu bewegen. Die Spannstange 18 hat in ihrem unteren Bereich ein Kopfstück 22, das als Vierkant ausgebildet ist, und das in eine entsprechende Vierkantaufnahme des Fahrzeugaufbaus im montierten Zustand der Teile eingeführt ist. Dabei umgreift im übrigen die Seitenwandung eine Eckrunge 11. An der Spannrolle 20 ist ein Hebel 23 vorgesehen, der mit den nicht sichtbaren Verriegelungselement wirkt. Dieser ist einzudrücken und auch herauszubewegen und wird durch einen Sicherungsring 24 gesichert. Nachdem die Spannstange 18 in die Vierkantaufnahme des Fahrzeugaufbaus über das Kopfstück 22 eingesetzt ist, kann die Seitenwandung über die Spannrolle 20 gespannt werden. Das Spannstangenrohr 19 hat dazu eine schlitzförmige Aufnahme, so dass ein entsprechender Keder in die Spannrolle 20 eingeführt werden kann, so dass sämtliche Teile geschützt anzuordnen sind.

Aus den Fig. 12 bis 14 ist näher der Bereich der Rückwand 9 mit dem erfindungsgemäßen Portalbalken 10 ersichtlich, der wie aus Fig. 13 ersichtlich als abgewinkelter Profilkörper ausgebildet ist, der um eine horizontale Achse 10 zu verschwenken ist. Dieser Portalbalken 10 hat verschiedene übereinander angeordnete Verriegelungsaufnahmen 10.1, die von einem Riegelfinger 27 von Türsicherungselementen 8.1, 8.2,9.1, 9.2. zu durchdringen sind. Der Portalbalken 10 selber ist als Kasten ausgebildet mit einer Vorderwandung 10.2 und einer Rückwandung 10.3 und einer inneren Haltestange 10.4, die von dem Riegelfinger 27 umgriffen werden kann. Dadurch, dass dieser schwenkbar ausgebildet ist, kann auch bei erhöhtem Nutzfahrzeugaubau, wie er aus Fig. 13 zu ersehen ist, nach entsprechendem Hochverschwenken des Profilbalkens 10 die ganze Nutzfahrzeughöhe zur Beladung freigegeben werden. Bei abgesenktem Hubdach erstreckt sich der Portalbalken 10 im wesentlichen hinter der Tür 9, wobei dann die obere Aufnahme 10.1 des Portalbalkens 10 von dem Verriegelungsfinger 27 genutzt wird. Im Kasteninneren 10.6 sind Lagerböcke 10.7 vorgesehen, die sich von der Vorderwand 10.2 bis zur Rückwand 10.3 erstrecken und den gesamten Aufbau aussteifen und zudem als Zentrierung für die Verriegelungsfinger 27 dienen.

## Patentansprüche

1. Fahrzeugaufbau für Nutzfahrzeuge mit einer Stirnwand und einer Türelemente (8, 9) umfassenden Rückwand sowie einen sich zwischen der Stirnwand und der Rückwand sowie Seitenwänden erstreckenden, an Längsträgern und Querträgern festlegbaren Hubdach, welche auf höhenverstellbaren vorderen und hinteren Eckrungen (11) abgestützt und über Kraftheber (1, 2, 3, 4) in unterschiedliche Höhenpositionen überführbar sind, wobei die Türelemente (8, 9) über Verriegelungsfinger (27) aufweisende Türsicherungselemente (8.1, 8.2, 9.1, 9.2) an einem heckseitigen Portalbalken (10) verriegelbar sind, welcher mehrere übereinander angeordnete Verriegelungsaufnahmen (10.1) zur Verriegelung der Türelemente (8.9) in unterschiedlichen Höhenlagen des Hubdaches aufweist, **dadurch gekennzeichnet, dass** der Portalbalken (10) um eine im wesentlichen horizonale Achse (10.5) schwenkbar an dem Fahrzeugaufbau festlegbar und mit den hinteren Eckrungen (11) in unterschiedliche Höhenpositionen bewegbar und in seiner zurückverschwenkten Ausgangslage unmittelbar hinter der Innenseite eines Türflügels (8, 9) gelegen ist, wobei der Portalbalken (10) parallel zu den Längsträgern zur Vorderwand hin verschiebbar und zurück bewegbar ausgebildet ist und wobei der Portalbalken (10) durch einen winkelförmigen Profilkörper gebildet ist mit einer horizontalen Schwenkachse (10.5), die gegenüber der vertikalen Türebene der Türelemente (8,9) zur Vorderwand des Fahrzeugaufbaus hin versetzt ist, wobei der Portalbalken (10) kastenförmig und zum Fahrzeuginneren hin geschlossen ausgebildet ist mit einem inneren Kastenraum (10.6), zu dem die Verriegelungsaufnahmen (10.1) hin offen sind.

2. Fahrzeugaufbau nach Anspruch 1, **dadurch gekennzeichnet, dass** dem Portalbalken (10) für jedes Türsicherungselement (8.1, 8.2., 9.1.,9.2) eines Türelementes (8,9) eine Haltestange zugeordnet ist.

3. Fahrzeugaufbau nach Anspruch 1 oder 2, **dadurch gekennzeichnet, dass** die Haltestange (10.4) im Kasteninneren (10.6) angeordnet ist.

4. Fahrzeugaufbau nach einem der Ansprüche 1 bis 3, **dadurch gekennzeichnet, dass** der Portalbalken (10) in seinem abgeklappten Zustand den Fahrzeugaufbau zum Inneren hin abdichtet.

5. Fahrzeugaufbau nach einem der Ansprüche 1 bis 4, **dadurch gekennzeichnet, dass** der Portalbalken (10) mit einem Gelenk an einem Querträger des Nutzfahrzeuges derart gelagert ist, das es um den Drehpunkt dieser Lagerung nach oben und unten schwenkbar ist.

6. Fahrzeugaufbau nach einem der Ansprüche 1 bis 5, **dadurch gekennzeichnet, dass** im Kasteninneren (10.6) eine Haltestange (10.4) in Lagerböcken (10.7) mehrfach gelagert ist und das Gegenstück zu den Verriegelungsfingern (27) bildet.

7. Fahrzeugaufbau nach einem der Ansprüche 1 bis 6, **dadurch gekennzeichnet, dass** die Kraftheber (1, 2) von zwei vorderen Eckrungen (11) und die Kraftheber (3, 4) von zwei hinteren Eckrungen (11) nach jeweiliger Aktivierung die vorderen und hinteren Eckrungen (11) in ihre jeweilige Maximalhöhenposition überführen und die vorderen und hinteren Eckrungen (11) nach Deaktivierung der Kraftheber (1, 2, 3, 4) infolge Schwerkraft in eine durch ein jeweiliges Widerlager (17) einstellbare Höhenposition absenkbar sind.

8. Fahrzeugaufbau nach Anspruch 7, **dadurch gekennzeichnet, dass** die Kraftheber (1, 2) von zwei vorderen und die Kraftheber (3, 4) von zwei hinteren Eckrungen (11) synchron schaltbar sind.

9. Fahrzeugbau nach Anspruch 8, **dadurch gekennzeichnet, dass** die Kraftheber (1, 2, 3, 4) als Hydraulikzylinder ausgebildet sind und das Hydraulikmedium von einer Hydraulikpumpe (5) einem der Kraftheber (1, 3)einer vorderen und einer hinteren Eckrunge (11) zuleitbar ist, und dem synchron geschalteten zweiten Kraftheber (2, 4) der vorderen Eckrunge (11) bzw. der hinteren Eckrunge (11) das Hydraulikmedium von dem jeweils ersten Kraftheber (1, 3) zugeführt wird.

10. Fahrzeugaufbau nach Anspruch 9, **dadurch gekennzeichnet, dass** die Eckrungen (11) jeweils ein höhenbewegliches und ein arretierbares Schubstück (12) aufweisen, das mit einer Schubstange (1.1, 2.1, 3.1, 4.1) eines Krafthebers (1, 2, 3, 4) verbindbar ist.

11. Fahrzeugaufbau nach Anspruch 10, **dadurch gekennzeichnet, dass** das Schubstück (12) entlang eines Schlüsselelementes 813) einer Eckrunge (11) bewegbar ist, an welchem ein Schlüssel (17) als Widerlager höhenverstellbar arretierbar ist.

12. Fahrzeugaufbau nach Anspruch 11, **dadurch gekennzeichnet, dass** der Schlüssel (17) als Schiebeelement ausgebildet und in Schlitzführungen (14.1) des Schlüsselelementes (13) höhenbeweglich geführt ist.

13. Fahrzeugaufbau nach Anspruch 11 oder 12, **dadurch gekennzeichnet, dass** der Schlüssel (17) in Lochausnehmungen (14) des Schlüsselelementes (13) einführbar ist.

14. Fahrzeugaufbau nach Anspruch 13, **dadurch gekennzeichnet, dass** der Schlüssel in Lochausnehmungen (14) des Schlüsselelementes (13) einführbare Arretieranformungen (17.2) aufweist.

15. Fahrzeugaufbau nach einem der Ansprüche 11 bis 14, **dadurch gekennzeichnet, dass** der Schlüssel (17) mittels einer Handschlaufe (17.5) von dem Schlüsselelement (13) lösbar ist.

16. Fahrzeugaufbau nach einem der Ansprüche 10 bis 15, **dadurch gekennzeichnet, dass** das innere Schubstück (12) ein mit Abstand zu diesem angeordnetes Schutzblech (16) aufweist, das mit dem Schubstück (12) höhenverstellbar ist und bei einer Höhenverstellung das Höhenverstellmaß überdeckt.

17. Fahrzeugaufbau nach Anspruch 16, **dadurch gekennzeichnet, dass** das Schutzblech 816) eine Längenerstreckung hat, die der maximalen Höhenverstellung der Eckrunge (11) entspricht.

18. Fahrzeugaufbau nach einem der Ansprüche 1 bis 17, **dadurch gekennzeichnet, dass** die flexibel ausgebildeten Seitenwände in Spannstangen (18) festlegbar sind, die längenveränderlich ausgebildet sind.

19. Fahrzeugaufbau nach Anspruch 18, **dadurch gekennzeichnet, dass** eine Spannstange (18) eine in einem Spannstangenrohr (17) geführte Spannrolle (20) aufweist und die Spannrolle (20) mit dem Spannstangenrohr (19) in unterschiedlichen Längenpositionen durch einen Riegel arretierbar ist.

20. Fahrzeugaufbau nach Anspruch 19, **dadurch gekennzeichnet, dass** das Spannstangenrohr (19) Bohrungen (21) aufweist, in die ein bewegliches Verriegelungselement der Spannrolle (20) als Riegel einführbar ist.

21. Fahrzeugaufbau nach Anspruch 20, **dadurch gekennzeichnet, dass** das Verriegelungselement über einen auf- und abbeweglichen Sicherungsring (24) in der Bohrung (21) arretierbar ist.

22. Fahrzeugaufbau nach Anspruch 20 oder 21, **dadurch gekennzeichnet, dass** das Verriegelungselement mittels eines klappbaren Hebels (23) in die Bohrung (21) einführbar und aus dieser wieder herausbringbar ist.

23. Fahrzeugaufbau nach einem der Ansprüche 20 bis 22, **dadurch gekennzeichnet, dass** die Spannrolle (20) eine Schlitzführung zur Aufnahme eines Keders einer flexiblen Seitenwand aufweist.

24. Fahrzeugaufbau nach einem der Ansprüche 21 bis 23, **dadurch gekennzeichnet, dass** die Spannstange (18) einenends ein als Vierkant ausgebildetes Kopfstück (22) hat, das in eine entsprechende Vierkantaufnahme der Fahrzeugaufbaus einführbar ist.

25. Fahrzeugaufbau nach einem der Ansprüche 21 bis 24, **dadurch gekennzeichnet, dass** an der Spannstange (18) ein Schlaufenelement angreift, um die Spannstange (18) aus der Vierkantaufnahme des Fahrzeugaufbaus herauszuheben.

26. Fahrzeugaufbau nach einem der Ansprüche 1 bis 25, **dadurch gekennzeichnet, dass** im geschlossenen Zustand des Fahrzeugaufbaus die Seitenwand eine Eckrunge (11) übergreift.

## Claims

1. Vehicle body for commercial vehicles with a front wall and a rear wall comprising a door element (8, 9) and a lifting roof extending between the front wall and the rear wall and side walls, wherein said lifting roof can be fixed on side beams and cross beams which are supported on height-adjustable front and rear corner stanchions (11) and can be transferred by means of power stations (1, 2, 3, 4) into different height positions, wherein the door elements (8, 9) can be locked on a rear portal beam (10) by means of door locking elements (8.1, 8.2, 9.1, 9.2) having locking fingers (27), wherein said portal beam has a plurality of locking receptacles (10.1) arranged one above the other for locking the door elements (8.9) at different heights of the lifting roof, **characterised in that** the portal beam (10) can be fixed on the vehicle body so as to be pivotable about an essentially horizontal axis (10.5) and can be moved to different height positions with the rear corner stanchions (11) and is located in its pivoted-back starting position directly behind the inside of a door leaf (8, 9), wherein the portal beam (10) is designed to be displaceable back and forth, parallel to the side beams toward the front wall, and wherein the portal beam (10) is formed by an angular profile body with a horizontal pivot axis (10.5), which is offset from the vertical door plane of the door elements (8, 9) towards the front wall of the vehicle body, the portal beam (10) being box-shaped and designed to be closed towards the vehicle interior with an inner box space (10.6) to which the locking receptacles (10.1) are open.

2. Vehicle body according to claim 1, **characterised in that** the portal beam (10) for each door locking element (8.1, 8.2., 9.1., 9.2) of a door element (8, 9) is assigned a holding rod.

3. Vehicle body according to claim 1 or 2, **characterised in that** the holding rod (10.4) is arranged inside the box (10.6).

4. Vehicle body according to one of claims 1 to 3, **characterised in that** the portal beam (10) seals the vehicle body to the inside in its folded state.

5. Vehicle body according to one of claims 1 to 4, **characterised in that** the portal beam (10) is mounted with a joint on a cross beam of the commercial vehicle such that it can be pivoted up and down about the pivot point of this bearing.

6. Vehicle body according to one of claims 1 to 5, **characterised in that** a holding rod (10.4) is mounted in multiple layers in bearing blocks (10.7) in the inside of the box (10.6) and forms the counterpart to the locking fingers (27).

7. Vehicle body according to one of claims 1 to 6, **characterised in that** the power lift (1, 2) of two front corner stanchions (11) and the power lift (3, 4) of two rear corner stanchions (11), after activation, move the front and the rear corner stanchions (11) into their respective maximum height positions and the front and rear corner stanchions (11) can be lowered into a height position adjustable by a respective abutment (17) after deactivation of the power lift (1, 2, 3, 4) due to gravity.

8. Vehicle body according to claim 7, **characterised in that** the power lift (1, 2) of two front and the power lift (3, 4) of two rear corner stanchions (11) can be switched synchronously.

9. Vehicle body according to claim 8, **characterised in that** the power lifts (1, 2, 3, 4) are designed as hydraulic cylinders and the hydraulic medium from a hydraulic pump (5) can be supplied to one of the power lifts (1, 3) of a front and a rear corner stanchion (11), and the synchronously connected second power lift (2, 4) of the front corner stanchion (11) or the rear corner stanchion (11) is supplied with the hydraulic medium from the respectively first power lift (1, 3).

10. Vehicle body according to claim 9, **characterised in that** the corner stanchions (11) each have a vertically movable and a lockable thrust piece (12) which can be connected to a push rod (1.1, 2.1, 3.1, 4.1) of a power lift (1, 2, 3, 4).

11. Vehicle body according to claim 10, **characterised in that** the thrust piece (12) can be moved along a key element (13) of a corner stanchion (11), on which a key (17) can be locked in height-adjustable manner as an abutment.

12. Vehicle body according to claim 11, **characterised in that** the key (17) is designed as a sliding element and is guided so that it can move in height in slot guides (14.1) of the key element (13).

13. Vehicle body according to claim 11 or 12, **characterised in that** the key (17) can be inserted into hole recesses (14) in the key element (13).

14. Vehicle body according to claim 13, **characterised in that** the key has locking projections (17.2) which can be inserted into hole recesses (14) of the key element (13).

15. Vehicle body according to one of claims 11 to 14, **characterised in that** the key (17) can be detached from the key element (13) by means of a hand strap (17.5).

16. Vehicle body according to one of claims 10 to 15, **characterised in that** the inner thrust piece (12) has a fender (16) arranged at a distance from it, which is height-adjustable with the thrust piece (12) and covers the height adjustment dimension when the height is adjusted.

17. Vehicle body according to claim 16, **characterised in that** the fender (16) has a length that corresponds to the maximum height adjustment of the corner stanchion (11).

18. Vehicle body according to one of claims 1 to 17, **characterised in that** the flexible side walls can be fixed in tension rods (18) which are variable in length.

19. Vehicle body according to claim 18, **characterised in that** a tension rod (18) has a tension roller (20) guided in a tension rod tube (17) and the tension roller (20) can be locked in different length positions by a bolt with the tension rod tube (19).

20. Vehicle body according to claim 19, **characterised in that** the tension rod tube (19) has bores (21) into which a movable locking element of the tension roller (20) can be inserted as a bolt.

21. Vehicle body according to claim 20, **characterised in that** the locking element can be locked in the bore (21) via a locking ring (24) that is movable up and down.

22. Vehicle body according to claim 20 or 21, **characterised in that** the locking element can be inserted into and removed from the bore (21) by means of a foldable lever (23).

23. Vehicle body according to one of claims 20 to 22, **characterised in that** the tension roller (20) has a slot guide for receiving a welt of a flexible side wall.

24. Vehicle body according to one of claims 21 to 23, **characterised in that** the tension rod (18) has at one end a head piece (22) which is designed as a square, which can be inserted into a corresponding square receptacle of the vehicle body.

25. Vehicle body according to one of claims 21 to 24, **characterised in that** a loop element engages with the tension rod (18) in order to lift the tension rod (18) out of the square receptacle of the vehicle body.

26. Vehicle body according to one of claims 1 to 25, **characterised in that** in the closed state of the vehicle body, the side wall engages over a corner stanchion (11).

## Revendications

1. Construction de véhicule pour véhicules utilitaires avec une paroi frontale et une paroi arrière comportant des éléments de porte (8, 9) ainsi qu'un toit relevable pouvant être fixé sur des longerons et des traverses, s'étendant entre la paroi frontale et la paroi arrière ainsi que des parois latérales, lesquels sont en appui sur des ranchers corniers (11) avant et arrière réglables en hauteur et peuvent être transportés par des dispositifs de relevage (1, 2, 3, 4) dans différentes positions verticales, sachant que les éléments de porte (8, 9) peuvent être verrouillés par des éléments de blocage de porte (8.1, 8.2, 9.1, 9.2) présentant des doigts de verrouillage (27) sur une barre de portique (10) côté arrière qui présente plusieurs logements de verrouillage (10.1) disposés les uns au-dessus des autres pour le verrouillage des éléments de porte (8.9) dans différentes positions verticales du toit relevable, **caractérisée en ce que** la barre de portique (10) peut être fixée de manière à pouvoir pivoter autour d'un axe sensiblement horizontal (10.5) sur la construction de véhicule et peut être déplacée avec les ranchers corniers (11) arrière dans différentes positions verticales et est directement placée dans sa position de départ repivotée derrière le côté intérieur d'un battant de porte (8, 9), dans laquelle la barre de portique (10) est réalisée de manière à pouvoir coulisser parallèlement aux longerons vers l'avant et vers l'arrière au niveau de la paroi frontale et dans laquelle la barre de portique (10) est formée par un corps profilé angulaire doté d'un axe sensiblement horizontal (10.5) qui est décalé vers l'avant au niveau de la paroi frontale de la construction de véhicule par rapport au plan de la porte de l'élément de porte (8, 9), dans laquelle la barre de portique (10) est réalisée en forme de caisson et fermée vers l'intérieur du véhicule, avec une chambre de caisson (10.6) intérieure vers laquelle les logements de verrouillage (10.1) sont ouverts.

2. Construction de véhicule selon la revendication 1, **caractérisée en ce que** la barre de portique (10) est associée à la barre de portique pour chaque élément de blocage de porte (8.1, 8.2, 9.1., 9.2) d'un élément de porte (8, 9).

3. Construction de véhicule selon la revendication 1 ou 2, **caractérisée en ce que** la barre d'appui (10.4) est disposée à l'intérieur du caisson (10.6).

4. Construction de véhicule selon l'une quelconque des revendications 1 à 3, **caractérisée en ce que** la barre de portique (10) rend étanche la construction de véhicule vers l'intérieur dans son état rabattu.

5. Construction de véhicule selon l'une quelconque des revendications 1 à 4, **caractérisée en ce que** la barre de portique (10) est logée avec une articulation sur une traverse du véhicule utilitaire de telle manière qu'elle puisse être pivotée vers le haut et le bas autour du point de rotation de ce logement.

6. Construction de véhicule selon l'une quelconque des revendications 1 à 5, **caractérisée en ce qu'**une barre d'appui (10.4) est logée de manière multiple dans des supports de palier (10.7) à l'intérieur du caisson (10.6) et forme la pièce antagoniste des doigts de verrouillage (27).

7. Construction de véhicule selon l'une quelconque des revendications 1 à 6, **caractérisée en ce que** les dispositifs de relevage (1, 2) de deux ranchers corniers (11) avant et les dispositifs de relevage (3, 4) de deux ranchers corniers (11) arrière transfèrent après leur activation les ranchers corniers avant et arrière (11) dans leur position verticale maximale respective et les ranchers corniers avant et arrière (11) peuvent être abaissés après la désactivation des dispositifs de relevage (1, 2, 3, 4) sous l'effet de la force de gravité dans une position verticale réglable par un contre-palier respectif (17).

8. Construction de véhicule selon la revendication 7, **caractérisée en ce que** les dispositifs de relevage (1, 2) de deux ranchers corniers avant et les dispositifs de relevage (3, 4) de deux ranchers corniers arrière (11) sont commutables de manière synchrone.

9. Construction de véhicule selon la revendication 8, **caractérisée en ce que** les dispositifs de relevage (1, 2, 3, 4) sont réalisés comme des vérins hydrauliques et le fluide hydraulique peut être amené d'une pompe hydraulique (5) à l'un des dispositifs de relevage (1, 3) d'un rancher cornier (11) avant et arrière, et le fluide hydraulique est amené au second dispositif de relevage (2, 4) monté de manière synchrone du rancher cornier (11) avant ou du rancher cornier arrière (11) par le premier dispositif de relevage respectif (1, 3).

10. Construction de véhicule selon la revendication 9, **caractérisée en ce que** les ranchers corniers (11) présentent chacun une pièce de poussée (12) mobile en hauteur et une pièce de poussée (12) blocable qui peut être reliée à une bielle (1.1, 2.1, 3.1, 4.1) d'un dispositif de relevage (1, 2, 3, 4).

11. Construction de véhicule selon la revendication 10, **caractérisée en ce que** la pièce de poussée (12) est mobile le long d'un élément clé 813) d'un rancher cornier (11), sur lequel une clé (17) servant de contre-palier peut être bloquée de manière réglable en hauteur.

12. Construction de véhicule selon la revendication 14, **caractérisée en ce que** la clé (17) est réalisée comme un élément coulissant et est guidée de manière mobile verticalement dans des guidages fendus (14.1) de l'élément clé (13).

13. Construction de véhicule selon la revendication 11 ou 12, **caractérisée en ce que** la clé (17) peut être introduite dans des évidements percés (14) de l'élément clé (13).

14. Construction de véhicule selon la revendication 13, **caractérisée en ce que** la clé présente des formations de blocage (17.2) pouvant être introduites dans des évidements percés (14) de l'élément clé (13).

15. Construction de véhicule selon l'une quelconque des revendications 11 à 14, **caractérisée en ce que** la clé (17) peut être détachée à l'aide d'une poignée (17.5) de l'élément clé (13).

16. Construction de véhicule selon l'une quelconque des revendications 10 à 15, **caractérisée en ce que** la pièce de poussée (12) intérieure présente une tôle de protection (16) disposée à distance de celle-ci qui peut être réglée verticalement avec la pièce de poussée (12) et recouvre la dimension de réglage en hauteur lors d'un réglage en hauteur.

17. Construction de véhicule selon la revendication 16, **caractérisée en ce que** la tôle de protection 816) présente une étendue en longueur qui correspond au réglage en hauteur maximal du rancher cornier (11).

18. Construction de véhicule selon l'une quelconque des revendications 1 à 17, **caractérisée en ce que** les parois latérales réalisées de manière flexible peuvent être fixées dans des tiges de serrage (18) qui sont réalisées de manière modifiable en longueur.

19. Construction de véhicule selon la revendication 18, **caractérisée en ce qu'**une tige de serrage (18) présente un rouleau tendeur (20) guidé dans un tube de tige de serrage (17) et le rouleau tendeur (20) peut être bloqué avec le tube de tige de serrage (19) dans différentes positions longitudinales par un verrou.

20. Construction de véhicule selon la revendication 19, **caractérisée en ce que** le tube de tige de serrage (19) présente des perçages (21), dans lesquels un élément de verrouillage mobile du rouleau tendeur (20) peut être introduit comme verrou.

21. Construction de véhicule selon la revendication 20, **caractérisée en ce que** l'élément de verrouillage peut être bloqué par un circlip (24) mobile vers le haut et le bas dans le perçage (21).

22. Construction de véhicule selon la revendication 20 ou 21, **caractérisée en ce que** l'élément de verrouillage peut être introduit à l'aide d'un levier rabattable (23) dans le perçage (21) et ressorti de celui-ci.

23. Construction de véhicule selon l'une quelconque des revendications 20 à 22, **caractérisée en ce que** le rouleau tendeur (20) présente un guidage fendu pour le logement d'un bourrelet d'une paroi latérale flexible.

24. Construction de véhicule selon l'une quelconque des revendications 21 à 23, **caractérisée en ce que** la tige de serrage (18) présente d'un côté une tête (22) réalisée comme un carré qui peut être introduite dans un logement carré correspondant de la construction de véhicule.

25. Construction de véhicule selon l'une quelconque des revendications 21 à 24, **caractérisée en ce qu'**un élément de boucle agit sur la tige de serrage (18) afin de relever la tige de serrage (18) hors du logement carré de la construction de véhicule.

26. Construction de véhicule selon l'une quelconque des revendications 1 à 25, **caractérisée en ce que** la paroi latérale recouvre un rancher cornier (11) à l'état fermé de la construction de véhicule.
